# FASCICULE DE BREVET EUROPEEN

(11) **EP 3 692 583 B1**
(45) Date de publication et mention de la délivrance du brevet: **04.12.2024**
(21) Numéro de dépôt: 18785876.6
(22) Date de dépôt: 01.10.2018
(51) Int. Cl.: B01D 53/02

(54) **COFFRE A BATTERIE**
BOÎTE POUR BATTERIE
BATTERIENKOFFER

(30) Priorité: 02.10.2017 FR 1759179
(43) Date de publication de la demande: 12.08.2020
(73) Titulaire: Arkema France, 92700 Colombes (FR)
(72) Inventeur: RACHED, Wissam, 69630 Chaponost (FR); DUFAURE, Nicolas, 27300 Bernay (FR)
(74) Mandataire: Bandpay & Greuter
(86) Numéro de dépôt international: PCT/EP2018/076569
(87) Numéro de publication internationale: WO 2019/068599

(56) Documents cités:
- WO-A1-2013/045426
- US-A1- 2008 274 355
- US-B2- 8 178 230
- BASF: "Engineering plastics and polyurethanes for automotive electrics; Product applications, typical values", 1 January 2016 (2016-01-01), pages 1 - 76, XP093035058, Retrieved from the Internet <URL:https://www.scribd.com/document/306914159/Engineering-plastics-E-E-automotive-pdf> [retrieved on 20230327]
- CHI-HOON CHOI ET AL: "Development of Polymer Composite Battery Pack Case for an Electric Vehicle", SAE TECHNICAL PAPER SERIES, vol. 1, 16 April 2013 (2013-04-16), US, XP055441471, ISSN: 0148-7191, DOI: 10.4271/2013-01-1177

## Description

La présente invention concerne le domaine des véhicules automobiles du type électrique ou hybride, nécessitant l'utilisation de batteries électriques.

En particulier, la présente invention concerne un coffre à batterie pour véhicule automobile électrique ou hybride.

Par « véhicule automobile électrique», on entend un véhicule tel que défini dans le règlement N°100 des Nations Unies concernant l'homologation des véhicules électriques à batterie.

L'un des buts recherchés dans ce domaine automobile est de proposer des véhicules de moins en moins polluants. Ainsi, les véhicules électriques ou hybrides comportant une batterie visent à remplacer progressivement les véhicules thermiques, tels que les véhicules à essence ou bien à gasoil.

Or, il s'avère que la batterie est un constituant du véhicule relativement complexe. Il est nécessaire que sa température de fonctionnement n'excède pas 55°C, sinon certaines des cellules de la batterie peuvent se détériorer et en réduire ainsi la durée de vie. Il est également important d'éviter tout risque de flammes. De plus, selon l'emplacement de la batterie dans le véhicule, il peut être nécessaire de la protéger des chocs et de l'environnement extérieur, qui peut être à des températures extrêmes et à une humidité variable.

Ainsi, il est connu de protéger la batterie par un coffre. Les batteries sont aujourd'hui équipées d'un coffre en métal.

Ce coffre présente l'inconvénient d'être relativement lourd et de se dégrader relativement rapidement dans le temps, notamment si il est situé dans un environnement humide.

Basf: "ENGINEERING PLASTICS AND POLYURETHANES FOR AUTOMOTIVE ELECTRICS",https://www.plasticsportal.net/wa/plasticsEU~ru_RU/function/conversions:/publish/ common/upload/engineering_plastics/Engineering_plastics_E_E_automotive.pdf, 31 août 2016 , pages 1-37, XP093035058 décrit un coffre à batterie a base de polyamides renforcés.

Ainsi, il est recherché des matériaux remplaçant les structures métalliques connues, qui répondent au cahier des charges spécifiques mentionné ci-dessus.

Le but est atteint grâce à un coffre à batterie pour véhicule électrique ou hybride, dont les caractéristiques essentielles sont explicitement définies dans le libellé de la revendication indépendante.

D'autres caractéristiques de l'invention sont explicitement définies dans les libellés des revendications dépendantes 2 à 14.

Le coffre à batterie selon l'invention présente l'avantage d'être plus léger qu'une structure métallique. Ce gain de poids participe à l'impact sur l'économie d'énergie ou de carburant recherché pour des véhicules dits propres.

Selon son emplacement dans le véhicule, ce coffre peut se trouver au contact d'un environnement agressif : température élevée en été, température très basse en hiver, au contact de chlorure de zinc, chocs, humidité importante. Il a été observé que le coffre selon l'invention présente une résistance satisfaisante à ces contraintes extérieures.

Par ailleurs, la présence d'agents ignifugeants permet de répondre aux critères d'inflammabilité requis.

De plus, il a été observé, que selon les constructeurs automobiles, la forme des batteries pouvaient varier. En effet, les constructeurs cherchent à loger cette batterie dans des espaces inutilisés ou relativement inutilisables jusqu'à présent. Or, la mise en forme d'une matière plastique par moulage ou injection est bien plus facile à réaliser que celle d'une plaque métallique.

D'autres caractéristiques, aspects, objets et avantages de la présente invention apparaîtront encore plus clairement à la lecture de la description et des exemples qui suivent.

Il est précisé que l'expression "compris entre" utilisée dans les paragraphes précédents, mais également dans la suite de la présente description, doit s'entendre comme incluant chacune des bornes mentionnées.

Par « coffre à batterie », on entend au sens de la présente invention une enveloppe ou un boitier, qui se place autour de la batterie. Le coffre selon l'invention n'est pas un élément constitutif de la batterie. Le coffre a une fonction de protection de la batterie.

### Le polyamide

Le coffre selon l'invention est constitué d'une composition comprenant une matrice comprenant au moins un polyamide qui présente un nombre moyen d'atomes de carbone sur atome d'azote supérieur ou égale à 9, de préférence supérieur ou égale à 10, et plus préférentiellement compris entre 9 et 18, et particulièrement compris entre 10 et 18 .

Selon la présente invention, le terme "polyamide", également noté PA, vise :
- les homopolymères,
- les copolymères, ou copolyamides, à base de différents motifs amide, tel par exemple le copolyamide 6/12 avec des motifs amide dérivés du lactame-6 et du lactame-12.

De manière générale, les polyamides comprennent au moins deux motifs répétitifs identiques ou distincts, ces motifs étant formés à partir des deux monomères, ou comonomères, correspondants. Les polyamides sont donc préparés à partir de deux ou plusieurs monomères, ou comonomères, choisis parmi un aminoacide, un lactame et/ou un diacide carboxylique et une diamine.

Le polyamide selon l'invention peut être un homopolyamide et comprendre au moins deux motifs répétitifs identiques obtenus par polycondensation de monomères choisis parmi un aminoacide, un lactame et un motif répondant à la formule (diamine en Ca).(diacide en Cb), avec a représentant le nombre de carbones de la diamine et b représentant le nombre de carbones du diacide, a et b étant chacun compris entre 4 et 36, tels que définis ci-dessous.

Le polyamide selon l'invention peut également être un copolyamide et comprendre au moins deux motifs répétitifs distincts, ces motifs pouvant être obtenus par polycondensation de monomères choisis parmi un aminoacide, un lactame et un motif répondant à la formule (diamine en Ca).(diacide en Cb), avec a représentant le nombre de carbones de la diamine et b représentant le nombre de carbones du diacide, a et b étant chacun compris entre 4 et 36, tels que définis ci-dessous.

Le polyamide selon l'invention peut être aliphatique, cycloaliphatique, semi-aromatique ou encore aromatique.

Le polyamide selon l'invention peut comprendre au moins un aminoacide choisi parmi l'acide 9-aminononanoïque, l'acide 10-aminodécanoïque, l'acide 12-aminododécanoïque et l'acide 11-aminoundécanoïque ainsi que ses dérivés, notamment l'acide N-heptyl-11-aminoundécanoïque.

Le polyamide selon l'invention peut comprendre au moins un lactame choisi parmi la pyrrolidinone, la piperidinone, le caprolactame, l'énantholactame, le caprylolactame, le pelargolactame, le décanolactame, l'undecanolactame, et le laurolactame.

Le polyamide selon l'invention peut comprendre au moins un motif répondant à la formule (diamine en Ca).(diacide en Cb).

Lorsque le motif (diamine en Ca) est une diamine aliphatique et linéaire de formule H₂N-(CH₂)ₐ-NH₂, la diamine en Ca est choisie parmi la butanediamine (a=4), la pentanediamine (a=5), l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tetradécanediamine (a=14), l'hexadécanediamine (a=16), l'octadécanediamine (a=18), l'octadécènediamine (a=18), l'eicosanediamine (a=20), la docosanediamine (a=22) et les diamines obtenues à partir d'acides gras.

La diamine en Ca peut être une diamine aliphatique ramifiée choisie parmi la méthyl-pentane-méthylène-diamine (MPMD).

Lorsque la diamine est cycloaliphatique, elle est choisie parmi la bis(3,5-dialkyl-4-aminocyclohexyl)méthane, la bis(3,5-dialkyl-4-aminocyclohexyl)éthane, la bis(3,5-dialkyl-4-aminocyclo-hexyl)propane, la bis(3,5-dialkyl-4-aminocyclo-hexyl)butane, la bis-(3-méthyl-4-aminocyclohexyl)-méthane (BMACM ou MACM), la p-bis(aminocyclohexyl)-methane (PACM) et l'isopropylidenedi (cyclohexylamine) (PACP), la 1,3 bis(aminométhyl)cyclohexane (1,3-BAC, N° CAS : 2579-20-6) cis et trans, la 1,4 bis(aminométhyl)cyclohexane (1,4-BAC, N° CAS: 2549-07-9) cis et trans.

Elle peut également comporter les squelettes carbonés suivants : norbornyl méthane, cyclohexylméthane, dicyclohexylpropane, di(méthylcyclohexyl), di(methylcyclohexyl) propane. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Lorsque la diamine est alkylaromatique, elle est choisie parmi la 1,3-xylylène diamine et la 1,4-xylylène diamine et leur mélange.

Lorsque le monomère (diacide en Cb) est aliphatique et linéaire, il est choisi parmi l'acide succinique (y=4), ), l'acide pentanedioïque (y=5), l'acide adipique (y=6), l'acide heptanedioïque (y=7), l'acide octanedioïque (y=8), l'acide azélaïque (y=9), l'acide sébacique (y=10), l'acide undécanedioïque (y=11), l'acide dodécanedioïque (y=12), l'acide brassylique (y=13), l'acide tetradécanedioïque (y=14), l'acide hexadécanedioïque (y=16), l'acide octadécanoïque (y=18), l'acide octadécènoïque (y=18), l'acide eicosanedioïque (y=20), l'acide docosanedioïque (y=22) et les dimères d'acides gras contenant 36 cabones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl), di(methylcyclohexyl)propane.

Lorsque le diacide est aromatique, il est choisi parmi l'acide téréphtalique, isophtalique et le diacide naphtalènique.

A titre d'exemples de copolyamides, on peut citer des copolymères de caprolactame et de laurolactame (PA 6/12), des copolymères de caprolactame, d'acide adipique et d'hexaméthylène diamine (PA 6/66), des copolymères de caprolactame, de laurolactame, d'acide adipique et d'hexaméthylène diamine (PA 6/12/66), des copolymères de caprolactame, d'acide azélaïque et d'hexaméthylène diamine, d'acide amino-11-undécanoïque et de laurolactame, (PA 6/69/11/12), des copolymères de caprolactame, d'acide adipique et d'hexaméthylène diamine, d'acide amino-11-undécanoïque et de laurolactame (PA 6/66/11/12), des copolymères d'acide azélaïque et d'hexaméthylène diamine et de laurolactame (PA 69/12).

De préférence, le polyamide utilisé dans la composition selon l'invention est choisi parmi l'homopolyamide PA11 obtenu par polycondensation de l'acide amino-11-undécanoïque, l'homopolyamide PA12 obtenu par polycondensation du laurolactame ou de l'acide amino-12-dodécanoïque,

Plus particulièrement, les motifs polyamides sont choisis parmi PA612, PA 69/12, PA 614, PA 6/12, PA11/12, PA12, PA11, PA1010, PA1012, PA618, PAlOT, PA 6/12/66, PA12/10T, PA1010/10T, PA 6/6T/10T, PA 11/6T/10T, PA 12/6T/10T, PA 6/69/11/12, PA 6/66/11/12, PA11/10T, PA11/BACT, 11/BACT/6T, MXDT/10T, MPMDT/10T, BACT/6T et BACT/10T et leurs mélanges.

On peut utiliser des mélanges de polyamides. Avantageusement, la viscosité relative des polyamides, mesurée en solution à 1% dans l'acide sulfurique à 20°C, est comprise entre 1,5 et 5.

Le polyamide ou le mélange de polyamides est choisi de préférence suffisamment semi-cristallin, c'est-à-dire avec une enthalpie de fusion supérieure ou égale à 25J/g (mesurée par DSC).

De manière générale, les polyamides se distinguent par leur nombre d'atomes de carbone par atome d'azote, sachant qu'il y a autant d'atomes d'azote que de groupes amides (-CO-NH-).

Dans le cas d'un homopolyamide de type PA-X.Y, le nombre d'atomes de carbone par atome d'azote est la moyenne du motif X et du motif Y.

Dans le cas des copolyamides, le nombre d'atome de carbone par atome d'azote se calcule selon le même principe. Le calcul est réalisé au prorata molaire des différents motifs amides.

Un polyamide faiblement carboné est un polyamide à faible taux d'atomes de carbone(C) par rapport à l'atome d'azote (-NH-). Ce sont les polyamides avec moins de 9 atomes de carbone par atome d'azote, tel par exemple le polyamide-6, le polyamide-6.6, le polyamide-4.6, le copolyamide-6.T/6.6, le copolyamide 6.I/6.6, le copolyamide 6.T/6.I/6.6, le polyamide 9.T. I représente le diacide isophtalique.

Un polyamide fortement carboné est un polyamide à fort taux d'atomes de carbone (C) par rapport à l'atome d'azote (N). Ce sont les polyamides avec au moins 9 atomes de carbone par atome d'azote, tel par exemple le polyamide-9, le polyamide-12, le polyamide-11, le polyamide-10.10 (PA10.10), le copolyamide 12/10.T, le copolyamide 11/10.T, le polyamide-12.T, le polyamide-6.12 (PA6.12). T représente l'acide téréphtalique/isophtalique.

Dans le cas d'un homopolyamide de type PA-X.Y, le nombre d'atomes de carbone par atome d'azote est la moyenne du motif X et du motif Y. Ainsi le PA6.12 est un PA à 9 atomes de carbone par atome d'azote, autrement dit est un PA en C9. Le PA6.13 est en C9.5. Le PA-12.T est en C10, le T, c'est-à-dire l'acide téréphtalique, étant en C8.

Dans le cas des copolyamides, le nombre d'atomes de carbone par atome d'azote se calcule selon le même principe. Le calcul est réalisé au prorata molaire des différents motifs amides. Ainsi le coPA-6.T/6.6 60/40% mol est en C6,6 : 60%×(6+8)/2+40%×(6+6)/2 = 6,6. Dans le cas d'un copolyamide ayant des motifs de type non amide, le calcul s'effectue uniquement sur la part de motifs amides. De préférence, le polyamide ou le mélange de polyamide présent dans la matrice de la composition constituant le coffre présente un nombre moyen d'atomes de carbone sur atome d'azote supérieur ou égale à 9, de préférence supérieur ou égale à 10, et plus préférentiellement compris entre 9 et 18, et particulièrement compris entre 10 et 18.

Le polyamide préféré présent dans la matrice de la composition constituant le coffre est choisi parmi le PA612, PA 69/12, PA 614, PA 6/12, PA 11/12, PA12, PA11, PA1010, PA1012, PA618, PAlOT, PA12/10T, PA1010/10T, PA 11/6T/10T, PA 12/6T/10T, PA 6/69/11/12, PA11/10.T, 11/BACT, 11/BACT/6T, MXDT/10T, MPMDT/10T, BACT/6T et BACT/10T et leurs mélanges.

Préférentiellement, le polyamide ou le mélange de polyamides doit pouvoir être utilisé à des températures de service élevées. Un critère possible de choix est de les choisir préférentiellement avec une température de fusion supérieure ou égale à 170°C.

Par majoritaire, on entend au sens de la présente invention une proportion supérieure à 50% au sein de la matrice.

Le ou les polyamides représentent de 20 à 80% en poids, par rapport au poids total de la composition.

### Agent ignifugeant

Le coffre selon l'invention est constitué d'une composition comprenant une matrice comprenant au moins un agent ignifugeant.

De préférence, l'agent ignifugeant est choisi parmi des agents ignifugeants sans halogène, tels que décrits dans US 2008/0274355 et notamment un sel métallique choisi parmi un sel métallique de l'acide phosphinique, un sel métallique de l'acide diphosphinique, un polymère contenant au moins un sel métallique de l'acide phosphinique, un polymère contenant au moins un sel métallique de l'acide diphosphinique. L'agent ignifugeant peut également être choisi parmi du phosphore rouge, un oxyde d'antimoine, un oxyde de zinc, un oxyde de fer, un oxyde de magnésium, des borates métalliques, tels que un borate de zinc, des pyrophosphates de mélamine, des cyanurates de mélamine, des agents anti-goutte de nature siliconée ou fluorée.

L'agent ignifugeant peut aussi être un mélange des agents pr-cités.

Ils peuvent également être des agents ignifugeants halogénés tels que un polystyrène bromé ou polybromé, un polycarbonate bromé ou un phénol bromé.

De préférence, le sel métallique de l'acide phosphinique selon l'invention est de formule (I) suivante et le sel métallique de l'acide diphosphinique est de formule (II) suivante : 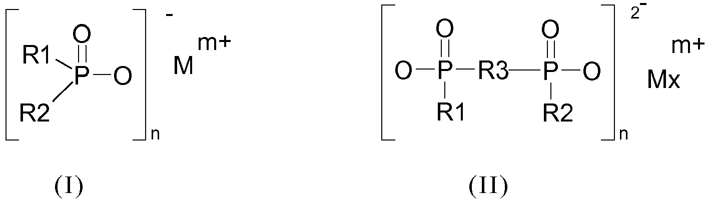 avec
R₁ et R₂, indépendamment l'un de l'autre, désignent un groupe alkyle en C₁-C₆ linéaire ou ramifié, ou un groupe aryle;
R₃ représente un groupe alkylène en C₁-C₁₀ linéaire ou ramifié, arylène en C₆-C₁₀, alkylarylène en C₆-C₁₀, ou arylalkylène en C₆-C₁₀,
M est un ion Mg, Ca, Al, Sb, Sn, Ge, Ti, Zn, Fe, Zr, Ce, Bi, Sr, Mn, Li, Na, K et/ou une base amine protonnée
m désigne un entier de 1 à 4,
n désigne un entier de 1 à 4,
x désigne un entier de 1 à 4,
n et m étant choisis de manière à ce que le sel soit neutre, c'est-à-dire qu'il ne soit pas porteur d'une charge électrique.

De préférence, M représente un ion calcium, magnésium, aluminium ou zinc.

De préférence, R₁ et R₂, indépendamment l'un de l'autre, désignent un groupe méthyle, éthyle, *n*-propyle, *iso*-propyle, *n*-butyle, *tertio*-butyle, *n*-pentyle et/ou phényle.

De préférence, R₃ représente un groupe méthylène, éthylène, *n-*propylène, *iso*-propylène, *n*-butylène, *tertio*-butylène, *n*-pentylène, *n-*octylène, *n*-dodécylène; phénylène, naphthylène; méthylphénylène, éthylphénylène, *tertio*-butylphénylène, méthylnaphthylène, éthylnaphthylène, *tertio*-butylnaphthylène; phénylméthylène, phényléthylène, phénylpropylène, or phénylbutylène.

La teneur en agent ignifugeant présent dans la matrice de la composition selon l'invention est comprise entre 10 et 30% en poids, de préférence 15 et 25% en poids, et plus particulièrement entre 17 et 22% en poids par rapport au poids total du ou des polyamides présent(s) dans la composition.

### Fibres de renfort

La composition selon l'invention constituant le coffre de batterie comprend de 20 à 80% en poids par rapport au poids total de la composition de fibres de renfort.

Les fibres présentes dans la composition selon l'invention peuvent être de dimensions différentes.

Les fibres de renfort peuvent être qualifiées de fibres courtes, longues ou continues. Un mélange de ces fibres de dimensions différentes et/ou de nature différente peut également être utilisé.

De préférence, les fibres dites courtes sont de longueur comprise entre 200 et 400 µm.

Les fibres dites longues présentent une longueur supérieure à 1000 µm.

Ces fibres de renfort peuvent être choisies parmi :
- les fibres minérales, celles-ci ayant des températures de fusion Tf' élevées et supérieures à la température de fusion Tf dudit polyamide présent dans la matrice de la composition du coffre selon l'invention et supérieures à la température de polymérisation et/ou de mise en oeuvre,
- les fibres polymériques ou de polymère ayant une température de fusion Tf' ou à défaut de Tf', une température de transition vitreuse Tg', supérieure à la température de polymérisation ou supérieure à la température de fusion Tf dudit polyamide présent dans la matrice de la composition du coffre selon l'invention et supérieure à la température de mise en oeuvre,
- les fibres naturelles,
- ou les mélanges des fibres citées ci-haut.

Comme fibres minérales convenables pour l'invention, on peut citer les fibres de carbone, ce qui inclut les fibres de nanotubes ou nanotubes de carbone (NTC), les nanofibres de carbone ou les graphènes ; les fibres de silice comme les fibres de verre, notamment de type E, R ou S2 ; les fibres de bore ; les fibres céramiques, notamment fibres de carbure de silicium, fibres de carbure de bore, fibres de carbonitrure de bore, fibres de nitrure de silicium, fibres de nitrure de bore, les fibres de basalte ; les fibres ou filaments à base de métaux et/ou de leurs alliages ; les fibres des oxydes métalliques, notamment d'alumine (Al₂O₃) ; les fibres métallisées comme les fibres de verre métallisées et les fibres de carbone métallisées ou les mélanges des fibres précitées.

La longueur des fibres de verre est mesurée selon la norme ISO 22314 :2006(E).

Comme fibres polymériques convenables pour l'invention, on peut citer :
- les fibres à base de polymère thermoplastique amorphe et présentent une température de transition vitreuse Tg supérieure à la Tg du polyamide ou mélange de polyamides, présent(s) dans la matrice, lorsque ce dernier est amorphe ; ou supérieure à la Tf du polyamide ou mélange de polyamides présent(s) dans la matrice, lorsque ce dernier est semi-cristallin.

Avantageusement, elles sont à base de polymère thermoplastique semi-cristallin et présentent une température de fusion Tf supérieure à la Tg du polyamide ou mélange de polyamides présent(s) dans la matrice, lorsque ce dernier est amorphe ; ou supérieure à la Tf du polyamide ou mélange de polyamides présent(s) dans la matrice lorsque ce dernier est semi-cristallin. Ainsi, il n'y a aucun risque de fusion pour les fibres organiques de constitution du matériau de renfort lors de l'imprégnation par la matrice thermoplastique du composite final.
- les fibres de polymères thermodurcissables et plus particulièrement choisies parmi : les polyesters insaturés, les résines époxy, les esters vinyliques, les résines phénoliques, les polyuréthanes, les cyanoacrylates et les polyimides, tels que les résines bis-maléimide, les aminoplastes résultant de la réaction d'une amine telle que la mélamine avec un aldéhyde tel que le glyoxal ou le formaldéhyde,
- les fibres de polymères thermoplastiques et plus particulièrement choisies parmi : le polyéthylène téréphtalate (PET), le polybutylène téréphtalate (PBT),
- les fibres de polyamides,
- les fibres d'aramides (comme le Kevlar^{®}) et polyamides aromatiques tels que ceux répondant à l'une des formules : PPD.T, MPD.I, PAA et PPA, avec PPD et MPD étant respectivement la p- et m-phénylène diamine, PAA étant les polyarylamides et PPA étant les polyphtalamides,
- les fibres de copolymères blocs de polyamide tel que le polyamide/polyéther, les fibres de polyaryléthers cétones (PAEK) telles que la polyétheréther cétone (PEEK), la polyéthercétone cétone (PEKK), la polyéthercétoneéthercétone cétone (PEKEKK).

Parmi les fibres d'origine naturelle, et notamment végétale, on peut citer les fibres à base de lin, de ricin, de bois, de kénaf, de noix de coco, de chanvre, de jute, de lignine, de bambou, de soie notamment d'araignée, de sisal, et d'autres fibres cellulosiques, en particulier de viscose. Ces fibres d'origine végétale peuvent être utilisées pures, traitées ou bien enduites d'une couche d'enduction, en vue de faciliter l'adhérence et l'imprégnation de la matrice polymère.

Les fibres de renfort peuvent constituées un matériau fibreux, qui peut également être un tissu, tressé ou tissé avec des fibres.

Il peut également correspondre à des fibres avec des fils de maintien.

Ces fibres de constitution peuvent être utilisées seules ou en mélanges. Ainsi, des fibres organiques peuvent être mélangées aux fibres minérales pour être imprégnées de la matrice polymère et former le matériau fibreux pré-imprégné.

Les mèches de fibres organiques peuvent avoir plusieurs grammages. Elles peuvent en outre présenter plusieurs géométries. Les fibres peuvent se présenter sous forme de fibres courtes, qui composent alors les feutres ou les non tissés pouvant se présenter sous la forme de bandes, nappes, ou morceaux, ou sous forme de fibres continues, qui composent les tissus 2D, les tresses ou mèches de fibres unidirectionnelles (UD) ou non tissées. Les fibres de constitution du matériau fibreux peuvent en outre se présenter sous forme d'un mélange de ces fibres de renfort de différentes géométries.

De préférence le matériau fibreux est constitué par des fibres continues de carbone, de verre ou de carbure de silicium ou leur mélange, en particulier des fibres de carbone. Il est utilisé sous forme d'une mèche ou de plusieurs mèches.

Les fibres de renfort courtes préférées sont des fibres courtes choisies parmi les : fibres de carbone, y compris métallisées, fibres de verre, y compris métallisées de type E, R, S2, fibres d'aramides (comme le Kevlar^{®}) ou de polyamides aromatiques, les fibres de polyaryléthers cétones (PAEK), telle que la polyétheréther cétone (PEEK), fibres de la polyéthercétone cétone (PEKK), fibres de la polyéthercétoneéthercétone cétone (PEKEKK) ou leurs mélanges.

De préférence, les fibres de renfort sont sélectionnées parmi les fibres de verre, de carbone, de céramique, d'aramide ou leurs mélanges.

Selon un mode de réalisation de l'invention, le coffre selon l'invention présente des propriétés de conduction de la chaleur. Selon ce mode de réalisation préféré, les fibres de renforts seront de préférence choisies parmi les fibres de carbone, les fibres de nitrure de bore.

Selon un autre mode de réalisation de l'invention, le coffre selon l'invention présente des propriétés isolantes à la chaleur. Selon ce mode de réalisation préféré, les fibres de renforts seront de préférence choisies parmi les fibres de verre, les fibres de basalte, les fibres d'aramide.

Plus particulièrement, la teneur en fibres de renfort dans la composition selon l'invention est comprise entre 20 et 80% en poids, en poids par rapport au poids total de la composition.

En fonction de la taille des fibres utilisées : courtes, longues ou continues, la teneur en fibres de renfort peut être différente dans la composition de l'invention.

Ainsi, dans le cas de fibres de renfort courtes, la teneur en fibres est préférentiellement comprise entre 20 et 60% en poids de fibres de renfort.

Dans, le cas de fibres de renfort longues ou continues, la teneur en fibres est préférentiellement comprise entre 60 et 80% en poids de fibres de renfort.

### Les modifiants chocs

La composition selon l'invention constituant le coffre de batterie comprend de 0 à 20% en poids par rapport au poids total de la composition d'au moins un modifiant choc.

Le modifiant choc est avantageusement constitué par un polymère présentant un module de flexion inférieur à 100 MPa mesuré selon la norme ISO 178 à 50% HR et de Tg inférieure à 0°C mesurée selon la norme 11357-2 de 2013.

La température de transition vitreuse Tg des polyamides est mesurée à l'aide d'un calorimètre différentiel à balayage (DSC), après un deuxième passage en chauffe, suivant la norme ISO 1 1357-2:2013. La vitesse de chauffage et de refroidissement est de 20°C/min.

De préférence, le modifiant choc est constitué d'une ou plusieurs polyoléfines, une partie ou la totalité de celles-ci portant une fonction choisie parmi les fonctions acide carboxylique, anhydride carboxylique et époxyde. Tout particulièrement, la polyoléfine peut être choisie parmi un copolymère d'éthylène et de propylène à caractère élastomère (EPR), un copolymère éthylène-propylène-diène à caractère élastomère (EPDM) et un copolymère éthylène/(méth)acrylate d'alkyle.

La composition peut comprendre jusqu'à 50% en poids, par rapport au poids total de ladite composition, d'une polyoléfine semi-cristalline ou d'un mélange de polyoléfines, présentant un module de flexion, mesuré selon la norme ISO 178 à 50% HR, supérieur à 300 MPa, avantageusement supérieur à 800 MPa.

Ce modifiant choc est une polyoléfine fonctionnalisée (B1).

Selon l'invention, on entend par polyoléfine fonctionnalisée (B1) les polymères suivants.

La polyoléfine fonctionnalisée (B1) peut être un polymère d'alpha-oléfine ayant des motifs réactifs : les fonctionnalités. De tels motifs réactifs sont les fonctions acides carboxyliques, anhydrides, ou époxy.

A titre d'exemple, on peut citer comme polyoléfines les homopolymères ou copolymères d'alpha oléfines ou de dioléfines, telles que par exemple, éthylène, propylène, butène-1, octène-1, butadiène, et plus particulièrement :
- les homopolymères et copolymères de l'éthylène, en particulier LDPE, HDPE, LLDPE (linear low density polyethylene, ou polyéthylène basse densité linéaire), VLDPE (very low density polyethylene, ou polyéthylène très basse densité) et le polyéthylène métallocène,
- les homopolymères ou copolymères du propylène,
- les copolymères éthylène/alpha-oléfine tels qu'éthylène /propylène, les EPR (abréviation d'ethylene-propylene-rubber) et éthylène/propylène/diène (EPDM),
- les copolymères blocs styrène/éthylène-butène/styrène (SEBS), styrène/butadiène/styrène (SBS), styrène/isoprène/styrène (SIS), styrène/éthylène-propylène/styrène (SEPS),
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle (EVA), la proportion de comonomère pouvant atteindre 40% en poids.

Ces polyoléfines décrites ci-dessus peuvent être greffées, co-polymérisées ou ter polymérisées par des motifs réactifs (les fonctionnalités), tels que les fonctions acides carboxyliques, anhydrides, ou époxy.

Plus particulièrement, ces polyoléfines sont greffées ou co- ou ter polymérisées par des époxydes insaturés tels que le (méth)acrylate de glycidyle, ou par des acides carboxyliques ou les sels ou esters correspondants tels que l'acide (méth)acrylique (celui-ci pouvant être neutralisé totalement ou partiellement par des métaux tels que Zn, etc. ) ou encore par des anhydrides d'acides carboxyliques tels que l'anhydride maléique.

La polyoléfine fonctionnalisée (B1) peut être choisie parmi les (co)polymères suivants, greffés avec anhydride maléique ou méthacrylate de glycidyle, dans lesquels le taux de greffage est par exemple de 0,01 à 5% en poids :
- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/ propylène, les EPR (abréviation d'éthylène-propylene-rubber) et éthylène/propylène/diène (EPDM),
- les copolymères blocs styrène/éthylène-butène/styrène (SEBS), styrène/butadiène/styrène (SBS), styrène/isoprène/ styrène (SIS), styrène/éthylène-propylène/styrène (SEPS),
- des copolymères éthylène et acétate de vinyle (EVA), contenant jusqu'à 40% en poids d'acétate de vinyle,
- des copolymères éthylène et (méth)acrylate d'alkyle, contenant jusqu'à 40% en poids de (méth)acrylate d'alkyle,
- des copolymères éthylène et acétate de vinyle (EVA) et (méth)acrylate d'alkyle, contenant jusqu'à 40% en poids de comonomères.

Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (B1) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (B1) peut aussi être un co- ou ter polymère d'au moins les motifs suivants :
(1) éthylène,
(2) (méth)acrylate d'alkyle ou ester vinylique d'acide carboxylique saturé et
(3) anhydride tel que anhydride maléique ou acide (méth)acrylique ou époxy tel que (méth)acrylate de glycidyle.

A titre d'exemple de polyoléfines fonctionnalisées de ce dernier type, on peut citer les copolymères suivants, où l'éthylène représente de préférence au moins 60% en poids et où le termonomère (la fonction) représente par exemple de 0,1 à 12% en poids du copolymère
- les copolymères éthylène/(méth)acrylate d'alkyle/acide (méth)acrylique ou anhydride maléique ou méthacrylate de glycidyle;
- les copolymères éthylène/acétate de vinyle/anhydride maléique ou méthacrylate de glycidyle ;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth)acrylate d'alkyle" dans (B1) désigne les méthacrylates et les acrylates d'alkyle en C₁ à C₈, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Par ailleurs, les polyoléfines précitées (B1) peuvent aussi être réticulées par tout procédé ou agent approprié (diépoxy, diacide, peroxyde, etc.) ; le terme polyoléfine fonctionnalisée comprend aussi les mélanges des polyoléfines précitées avec un réactif difonctionnel tel que diacide, dianhydride, diépoxy, etc. susceptible de réagir avec celles-ci ou les mélanges d'au moins deux polyoléfines fonctionnalisées pouvant réagir entre elles.

Les copolymères mentionnés ci-dessus (B1) peuvent être copolymérisés de façon statistique ou séquencée et présenter une structure linéaire ou ramifiée.

Le poids moléculaire, l'indice MFI, la densité de ces polyoléfines peuvent aussi varier dans une large mesure, ce que l'homme de l'art appréciera. L'indice MFI, abréviation de Melt Flow Index, est l'indice de fluidité à l'état fondu. On le mesure selon la norme ASTM 1238.

Avantageusement, les polyoléfines fonctionnalisées (B1) sont choisies parmi tout polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader^{®} de la Demanderesse ou des polyoléfines greffées par de l'anhydride maléique comme les Orevac^{®} de la Demanderesse ainsi que des terpolymères de l'éthylène, d'acrylate d'alkyle et d'acide (meth) acrylique. On peut citer aussi les homopolymères ou copolymères du polypropylène greffés par un anhydride d'acide carboxylique puis condensés avec des polyamides ou des oligomères mono aminés de polyamide, comme décrit dans la demande EP 0 342 066.

Plus particulièrement, les polyoléfines fonctionnalisées (B1) sont :
- les terpolymères d'éthylène, d'acrylate d'alkyle et d'anhydride maléique ;
- les terpolymères d'éthylène, d'acrylate d'alkyle et de méthacrylate de glycidyle ;
- les polypropylène et polyéthylènes greffés par l'anhydride maléique ;
- les copolymères d'éthylène et de propylène et éventuellement de diène monomère greffés par l'anhydride maléique ;
- les copolymères d'éthylène et d'octène greffés par l'anhydride maléique ;
et leur mélange.

La polyoléfine fonctionnalisée (B1) est présente en une teneur comprise entre 0 et 20 % en poids, de préférence entre 1 et 10 % en poids par rapport au poids total de la composition.

Avantageusement, la composition selon l'invention peut comprendre au moins une polyoléfine non fonctionnalisée (B2).

Une polyoléfine non fonctionnalisée (B2) est classiquement un homopolymère ou copolymère d'alpha oléfines ou de dioléfines, telles que par exemple, éthylène, propylène, butène-1, octène-1, butadiène. A titre d'exemple, on peut citer :
- les homopolymères et copolymères du polyéthylène, en particulier LDPE, HDPE, LLDPE (linear low density polyethylene, ou polyéthylène basse densité linéaire), VLDPE (very low density polyethylene, ou polyéthylène très basse densité) et le polyéthylène métallocène,
- les homopolymères ou copolymères du propylène,
- les copolymères éthylène/alpha-oléfine tels qu'éthylène /propylène, les EPR (abréviation d'ethylene-propylene-rubber) et éthylène/propylène/diène (EPDM),
- les copolymères blocs styrène/éthylène-butène/styrène (SEBS), styrène/butadiène/styrène (SBS), styrène/isoprène/styrène (SIS), styrène/éthylène-propylène/styrène (SEPS),
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle (EVA), la proportion de comonomère pouvant atteindre 40% en poids
et leur mélange.

Les copolymères mentionnés ci-dessus (B2) peuvent être copolymérisés de façon statistique ou séquencée et présenter une structure linéaire ou ramifiée.

Avantageusement, les polyoléfines (B2) non fonctionnalisées sont choisies parmi les homopolymères ou copolymères du polypropylène et tout homopolymère de l'éthylène ou copolymère de l'éthylène et d'un comonomère de type alpha oléfinique supérieur tel que le butène, l'hexène, l'octène ou le 4-méthyl-1-pentène. On peut citer par exemple les PP (PolyPropylène), les polyéthylènes de haute densité, polyéthylènes de moyenne densité, polyéthylènes basse densité linéaire, polyéthylènes basse densité, polyéthylènes de très basse densité. Ces polyéthylènes sont connus par l'homme de l'art comme étant produits selon un procédé radicalaire, selon une catalyse de type Ziegler ou, plus récemment, selon une catalyse dite métallocène. Sont également préférés les copolymères de l'éthylène et d'acétate de vinyle (EVA), tels que ceux commercialisés sous la dénomination commerciale EVATANE par la Demanderesse.

Lorsque la composition selon l'invention comprend une ou plusieurs polyoléfines non fonctionnalisées, le MFI de (A) et les MFI de (B1) et (B2) peuvent être choisis dans une large plage, il est cependant recommandé pour faciliter la dispersion de (B1) et (B2) que les viscosités de (B1) et (B2) soient proches.

La polyoléfine non fonctionnalisée est présente en une teneur comprise entre 0 et 20 % en poids, de préférence entre 1 et 10 % en poids par rapport au poids total de la composition.

### Additifs

La composition selon l'invention constituant le coffre de batterie peut également comprendre de 0 à 20% d'additifs.

De préférence, les additifs présents dans la composition constituant le coffre sont choisis parmi les stabilisants thermiques, les plastifiants, les lubrifiants, les pigments organiques ou inorganiques, les anti-UV, les antistatiques, les charges minérales, et les charges organiques.

Ce stabilisant thermique peut être choisi parmi un stabilisant à base de cuivre, un stabilisant organique et leur mélange.

Le stabilisant à base de cuivre peut être constitué d'un ou de plusieurs constituants choisis parmi les composés à base de cuivre tels que le chlorure cuivreux, le chlorure cuivrique, le bromure cuivreux, le bromure cuivrique, l'iodure cuivreux, l'iodure cuivrique, l'acétate cuivreux et l'acétate cuivrique.

On peut citer les halogénures, les acétates d'autres métaux tels l'argent. Ces composés à base de cuivre sont typiquement associés à des halogénures de métaux alcalins. Un exemple bien connu est le mélange de CuI et KI, où le ratio CuI:KI est typiquement compris entre 1:5 à 1:15. Un exemple d'un tel stabilisant est le Polyadd P201 de la société Ciba.

On trouvera de plus amples détails sur les stabilisants à base de cuivre dans le brevet US 2,705,227. Plus récemment, sont apparus des stabilisants à base de cuivre tel les cuivres complexés comme les Bruggolen H3336, H3337, H3373 de la société Brueggemann.

Le stabilisant à base de cuivre est choisi parmi les halogénures de cuivre, l'acétate de cuivre, les halogénures de cuivre ou l'acétate de cuivre en mélange avec au moins un halogénure de métal alcalin, et leurs mélanges, de préférence les mélanges d'iodure de cuivre et d'iodure de potassium (CuI/KI).

Le stabilisant organique peut être choisi, sans que cette liste soit restrictive, parmi :
- les anti-oxydants phénoliques, par exemple l'Irganox 245, l'Irganox 1010, l'Irganox 1098 de la société Ciba, l'Irganox MD1024 de la société Ciba, le Lowinox 44B25 de la société Great Lakes,
- les stabilisants à base de phosphore, comme les phosphites, par exemple l'Irgafos 168 de la société Ciba,
- un absorbeur UV, telle Tinuvin 312 de la société Ciba,
- un HALS, comme précédemment mentionné,
- un stabilisant de type amine, tel le Naugard 445 de la société Crompton, ou encore de type amine encombrée tel le Tinuvin 770 de la société Ciba,
- un stabilisant polyfonctionnel tel le Nylostab S-EED de la société Clariant.

On peut bien évidemment envisager un mélange de deux, ou plus, de ces stabilisants organiques.

La quantité de stabilisant(s) thermique(s) au sein de la composition est de préférence comprise entre 0,05 et 5 % en poids, par rapport au poids total de la composition.

Les additifs peuvent notamment être choisis parmi les plastifiants, tels que le BBSA (N-(n-butyl) benzene sulfonamide), les lubrifiants, par exemple l'acide stéarique ; les pigments organiques ou inorganiques ; les anti-UV; les antistatiques ; les charges minérales, telles que, par exemple, le talc, le carbonate de calcium, le dioxyde de titane, l'oxyde de zinc et les charges organiques.

Parmi les charges, on peut notamment citer la silice, le noir de carbone, les nanotubes de carbone, l'oxyde de titane ou encore les billes de verre.

De préférence, les additifs sont présents dans la composition généralement en une teneur de 0,1 à 15% en poids, de préférence 1 à 15 en poids par rapport au poids total de la composition.

Selon un mode de réalisation préféré, le coffre à batterie selon l'invention est constitué d'une composition comprenant :
- de 20 à 80% en poids par rapport au poids total de la composition de fibres de renfort,
- de 1 à 10% en poids par rapport au poids total de la composition d'au moins un modifiant choc,
- de 0,1 à 15% en poids par rapport au poids total de la composition d'additifs.
- le complément étant en une matrice comprenant
   - majoritairement au moins un polyamide et
   - de 10 à 30% en poids par rapport au poids total du ou des polyamides présent(s) dans la composition d'au moins un agent ignifugeant.

Selon un mode de réalisation plus préféré, le coffre à batterie selon l'invention est constitué d'une composition comprenant :
- de 20 à 80% en poids par rapport au poids total de la composition de fibres de renfort choisies parmi les fibres de verre, de carbone, de céramique, d'aramide ou leurs mélanges
- de 1 à 10% en poids par rapport au poids total de la composition d'au moins un modifiant choc,
- de 0,1 à 15% en poids par rapport au poids total de la composition d'additifs.
- le complément étant en une matrice comprenant
   - majoritairement au moins un polyamide dont le nombre moyen d'atomes de carbone sur atome d'azote est supérieur ou égale à 9,
   - de 10 à 30% en poids par rapport au poids total de la composition d'au moins un agent ignifugeant.

Le coffre à batterie peut également comporter au moins deux enveloppes :
- une enveloppe interne, destinée à être adaptée directement sur la batterie,
- une enveloppe externe.

Par interne, on entend au sens de la présente invention disposée contre la batterie.

Par externe, on entend au sens de la présente invention destinée à être en contact avec l'air ambiant, par exemple disposée côté route.

La présence d'une ou plusieurs enveloppes supplémentaires permet de conférer au coffre une protection renforcée. Selon les propriétés attendues, cette enveloppe supplémentaire peut présenter un effet barrière à l'humidité, c'est-à-dire assurant l'étanchéité de la batterie, une résistance aux chocs améliorée, des propriétés isolantes thermiquement.

Selon un mode de réalisation préférée, cette enveloppe externe peut être une enveloppe barrière à l'humidité, et notamment en EVOH, en polyoléfines, telles que le polypropylène ou les polyéthylènes : PEHD, PEBD.

### Procédé de préparation de la composition

On décrit par la suite un procédé de préparation de la composition telle que définie ci-dessus. Selon ce procédé, la composition peut être préparée par toute méthode, qui rend possible l'obtention d'un mélange homogène contenant la composition selon l'invention, et éventuellement d'autres additifs, tel que l'extrusion à l'état fondu, le compactage, ou encore le malaxeur à rouleau, tout en tenant compte de la taille des fibres de renfort.

On utilise avantageusement les dispositifs habituels de mélange et de malaxage de l'industrie des thermoplastiques tels que les extrudeuses, telles que les extrudeuses de type Double vis, et les malaxeurs, par exemple les co-malaxeurs BUSS.

### Procédé de fabrication du coffre

Selon la taille des fibres, le coffre de batterie selon l'invention peut être réalisé par différentes techniques.

Lorsque les fibres sont courtes, le coffre de batterie selon l'invention peut être obtenu par injection, extrusion, coextrusion, compression à chaud, multi-injection à partir d'au moins une composition telle que définie ci-dessus.

Lorsque les fibres sont longues ou continues, le coffre de batterie selon l'invention peut être réalisé par différentes techniques choisies parmi : pultrusion, enroulement filamentaire, thermocompression, moulage par infusion, moulage par transfert de résine (RTM), moulage structuré par injection et réaction (S-RIM) ou moulage par injection-compression. Une technique particulière en moule fermé est le RTM ou le S-RIM ou l'injection-compression. Le terme « résine » dans RTM s'identifie ici à la composition selon l'invention sans les fibres de renfort.

Selon un mode de réalisation particulier, le procédé de fabrication peut comprendre
- une étape d'application des fibres de renfort dans le moule, puis
- au moins une étape d'imprégnation desdites fibres par une composition précurseur de la composition selon l'invention.

Par composition précurseur de la composition selon l'invention, on entend une composition selon l'invention telle que définie ci-dessus, mais qui ne comprendrait pas les fibres de renfort.

### Utilisation

L'invention porte enfin sur l'utilisation du coffre à batterie tel que défini ci-dessus pour protéger la batterie des agressions extérieures.

## Revendications

1. Coffre à batterie pour véhicule électrique ou hybride, **caractérisé en ce qu'**il est constitué d'une composition comprenant :
- de 20 à 80% en poids par rapport au poids total de la composition de fibres de renfort,
- de 0 à 20% en poids par rapport au poids total de la composition d'au moins un modifiant choc,
- de 0 à 20% en poids par rapport au poids total de la composition d'additifs,
le complément étant une matrice comprenant
- majoritairement au moins un polyamide, le ou les polyamides présent(s) dans la matrice de la composition constituant le coffre présente(nt) un nombre moyen d'atomes de carbone sur atome d'azote supérieur ou égale à 9 et
- au moins un agent ignifugeant, la teneur en agent ignifugeant étant comprise entre 10 et 30 % en poids par rapport au poids total du ou des polyamides présent(s) dans la composition,
le ou les polyamides représentent de 20 à 80% en poids par rapport au poids total de la composition.

2. Coffre selon la revendication 1, **caractérisé en ce que** le ou les polyamides présent(s) dans la matrice de la composition constituant le coffre comprend/comprennent au moins deux motifs répétitifs, identiques ou différents, obtenus par polycondensation de monomères choisis parmi un aminoacide, un lactame et un motif répondant à la formule (diamine en Ca).(diacide en Cb), avec a représentant le nombre de carbones de la diamine et b représentant le nombre de carbones du diacide, a et b étant chacun compris entre 4 et 36.

3. Coffre selon l'une quelconque des revendications précédentes, **caractérisé en ce que** le ou les polyamides présent(s) dans la matrice de la composition constituant le coffre est/sont choisi(s) parmi le, PA612, PA 69/12, PA 614, PA 6/12, PA 11/12, PA12, PA11, PA1010, PA1012, PA618, PA10T, PA 6/12/66, PA12/10T, PA1010/10T, PA 6/6T/10T, PA 11/6T/10T, PA 12/6T/10T, PA 6/69/11/12, PA 6/66/11/12 PA11/10.T, PA11/BACT, 11/BACT/6T, MXDT/10T, MPMDT/10T, BACT/6T et BACT/10T et leurs mélanges.

4. Coffre selon l'une quelconque des revendications 1 à 3, **caractérisé en ce que** le ou les polyamides présent(s) dans la matrice de la composition constituant le coffre présente(nt) un nombre moyen d'atomes de carbone sur atome d'azote supérieur ou égale à 10, et plus préférentiellement compris entre 9 et 18, et particulièrement compris entre 10 et 18.

5. Coffre selon la revendication précédente, **caractérisé en ce que** le ou les polyamides présent(s) dans la matrice de la composition constituant le coffre est/sont choisi(s) parmi le, PA 69/12, PA 614, PA 6/12, PA 11/12, PA12, PA11, PA1010, PA1012, PA618, PA10T, PA12/10T, PA1010/10T, PA 11/6T/10T, PA 12/6T/10T, PA 6/69/11/12, PA11/10.T, PA11/BACT, 11/BACT/6T, MXDT/10T, MPMDT/10T et BACT/10T et leurs mélanges.

6. Coffre selon l'une quelconque des revendications précédentes, **caractérisé en ce que** l'agent ignifugeant présent dans la matrice de la composition constituant le coffre est choisi parmi un sel métallique de l'acide phosphinique, un sel métallique de l'acide diphosphinique, un polymère contenant au moins un sel métallique de l'acide phosphinique, un polymère contenant au moins un sel métallique de l'acide diphosphinique ; du phosphore rouge, un oxyde d'antimoine, un oxyde de zinc, un oxyde de fer, un oxyde de magnésium, des borates métalliques, tels que un borate de zinc, des pyrophosphates de mélamine, des cyanurates de mélamine et leur mélange.

7. Coffre selon l'une quelconque des revendications précédentes, caractérisé en ce la matrice de la composition constituant le coffre comprend une teneur en agent ignifugeant comprise entre 15 et 25 % en poids par rapport au poids total du ou des polyamides présent(s) dans la composition.

8. Coffre selon l'une quelconque des revendications précédentes, **caractérisé en ce que** la composition constituant le coffre comprend des fibres de renfort sélectionnées parmi les fibres minérales et les fibres polymériques.

9. Coffre selon l'une quelconque des revendications précédentes, **caractérisée en ce que** lesdites fibres de renfort sont choisies parmi les fibres de verre, de carbone, de céramique, d'aramide ou leurs mélanges.

10. Coffre selon l'une quelconque des revendications précédentes, **caractérisé en ce que** le modifiant choc présent dans la composition constituant le coffre est choisi parmi les polyoléfines fonctionnalisées (B1) suivantes :
- les terpolymères d'éthylène, d'acrylate d'alkyle et d'anhydride maléique ;
- les terpolymères d'éthylène, d'acrylate d'alkyle et de méthacrylate de glycidyle ;
- les polypropylène et polyéthylènes greffés par I ' anhydride maléique ;
- les copolymères d'éthylène et de propylène et éventuellement de diène monomère greffés par l'anhydride maléique ;
- les copolymères d ' éthylène et d'octène greffés par I ' anhydride maléique ;
et leur mélange.

11. Coffre selon l'une quelconque des revendications précédentes, **caractérisé en ce que** la teneur en modifiant choc est comprise entre 1 et 10 % en poids, par rapport au poids total de la composition.

12. Coffre selon l'une quelconque des revendications précédentes, **caractérisé en ce que** les additifs présents dans la composition constituant le coffre sont choisis parmi les stabilisants thermiques, tels que les halogénures de cuivre, les acétates de cuivre, les halogénures d'argent, les acétates d'argent, les stabilisants à base de cuivre complexé, les anti-oxydants phénoliques, les stabilisants à base de phosphore, les HALS, les stabilisants de type aminé, les stabilisants polyfonctionnels ; les plastifiants, les lubrifiants, les pigments organiques ou inorganiques, les anti-UV; les antistatiques ; les charges minérales, et les charges organiques, de préférence en une teneur comprise entre 0,1 et 15 % en poids par rapport au poids total de la composition.

13. Coffre selon l'une quelconque des revendications précédentes, **caractérisé en ce qu'**il comporte au moins deux enveloppes :
- une enveloppe interne constituée de la composition telle que définie à l'une quelconque des revendications 1 à 12, destinée à être adaptée directement sur la batterie et
- une enveloppe externe, en particulier en tant que couche barrière à l'humidité.

14. Utilisation du coffre à batterie tel que défini à l'une quelconque des revendications 1 à 13 pour protéger la batterie des agressions extérieures.

## Patentansprüche

1. Batteriekasten für Elektro- oder Hybridfahrzeug, **dadurch gekennzeichnet, dass** er aus einer Zusammensetzung besteht, umfassend:
- von 20 bis 80 Gewichts-% Verstärkungsfasern bezogen auf das Gesamtgewicht der Zusammensetzung,
- von 0 bis 20 Gewichts-% mindestens eines Schlagzähigkeitsmodifizierers bezogen auf das Gesamtgewicht der Zusammensetzung,
- von 0 bis 20 Gewichts-% Zusatzstoffe bezogen auf das Gesamtgewicht der Zusammensetzung,
wobei das Komplement eine Matrix ist, umfassend
- überwiegend mindestens ein Polyamid, wobei das oder die Polyamide, die in der Matrix der Zusammensetzung vorhanden sind, aus der der Kasten besteht, eine durchschnittliche Anzahl von Kohlenstoffatomen pro Stickstoffatom von größer als oder gleich wie 9 aufweisen, und
- mindestens ein Flammschutzmittel, wobei der Gehalt an Flammschutzmittel zwischen 10 und 30 Gewichts-% bezogen auf das Gesamtgewicht des oder der in der Zusammensetzung vorhandenen Polyamide ist,
das oder die Polyamide 20 bis 80 Gewichts-% bezogen auf das Gesamtgewicht der Zusammensetzung darstellen.

2. Kasten nach Anspruch 1, **dadurch gekennzeichnet, dass** das oder die Polyamide, die in der Matrix der Zusammensetzung vorhanden sind, aus der der Kasten besteht, mindestens zwei wiederkehrende gleiche oder verschiedene Einheiten umfassen, die durch Polykondensation von Monomeren erlangt werden, die ausgewählt sind aus einer Aminosäure, einem Lactam und einer Einheit, die der Formel (Diamin in Ca).(Disäure in Cb) entspricht, wobei a die Anzahl der Kohlenstoffe des Diamins darstellt und b die Anzahl der Kohlenstoffe der Disäure darstellt und a und b jeweils zwischen 4 und 36 liegen.

3. Kasten nach einem der vorherigen Ansprüche, **dadurch gekennzeichnet, dass** das oder die Polyamide, die in der Matrix der Zusammensetzung vorhanden sind, die den Kasten bildet, ausgewählt sind aus, PA612, PA 69/12, PA 614, PA 6/12, PA 11/12, PA12, PA11, PA1010, PA1012, PA618, PA10T, PA 6/12/66, PA12/10T, PA1010/10T, PA 6/6T/10T, PA 11/6T/10T, PA 12/6T/10T, PA 6/69/11/12, PA6/66/11/12 PA11/10.T, PA11/BACT, 11/BACT/6T, MXDT/10T, MPMDT/10T, BACT/6T und BACT/10T und deren Gemischen.

4. Kasten nach einem der Ansprüche 1 bis 3, **dadurch gekennzeichnet, dass** das oder die Polyamide, die in der Matrix der Zusammensetzung vorhanden sind, aus der der Kasten besteht, eine durchschnittliche Anzahl von Kohlenstoffatomen pro Stickstoffatom von größer als oder gleich wie 10 und bevorzugter zwischen 9 und 18 und insbesondere zwischen 10 und 18 aufweisen.

5. Kasten nach dem vorherigen Anspruch, **dadurch gekennzeichnet, dass** das oder die Polyamide, die in der Matrix der Zusammensetzung vorhanden sind, aus der der Kasten besteht, ausgewählt sind aus, PA 69/12, PA 614, PA 6/12, PA 11/12, PA12, PA11, PA1010, PA1012, PA618, PA10T, PA12/10T, PA1010/10T, PA 11/6T/10T, PA 12/6T/10T, PA 6/69/11/12, PA11/10.T, PA11/BACT, 11/BACT/6T, MXDT/10T, MPMDT/10T und BACT/10T und deren Gemischen.

6. Kasten nach einem der vorherigen Ansprüche, **dadurch gekennzeichnet, dass** das Flammschutzmittel, das in der Matrix der Zusammensetzung vorhanden ist, aus der der Kasten besteht, ausgewählt ist aus einem Metallsalz der Phosphinsäure, einem Metallsalz der Diphosphinsäure, einem Polymer, das mindestens ein Metallsalz der Phosphinsäure enthält, einem Polymer, das mindestens ein Metallsalz der Diphosphinsäure enthält; rotem Phosphor, Antimonoxid, Zinkoxid, Eisenoxid, Magnesiumoxid, Metallboraten, wie beispielsweise Zinkborat, Melaminpyrophosphaten, Melamincyanuraten und deren Gemisch.

7. Kasten nach einem der vorherigen Ansprüche, **dadurch gekennzeichnet, dass** die Matrix der Zusammensetzung, aus der der Kasten besteht, einen Gehalt an Flammschutzmittel zwischen 15 und 25 Gewichts-%, bezogen auf das Gesamtgewicht des oder der Polyamide umfasst, die in der Zusammensetzung vorhanden sind.

8. Kasten nach einem der vorherigen Ansprüche, **dadurch gekennzeichnet, dass** die Zusammensetzung, aus der der Kasten besteht, Verstärkungsfasern umfasst, die ausgewählt sind aus Mineralfasern und Polymerfasern.

9. Kasten nach einem der vorherigen Ansprüche, **dadurch gekennzeichnet, dass** die Verstärkungsfasern aus ausgewählt sind Glas-, Kohlenstoff-, Keramik-, Aramidfasern oder deren Gemischen.

10. Kasten nach einem der vorherigen Ansprüche, **dadurch gekennzeichnet, dass** der Schlagzähigkeitsmodifizierer, der in der Zusammensetzung vorhanden ist, aus der der Kasten besteht, ausgewählt ist aus den folgenden funktionalisierten Polyolefinen (B1):
- Ethylen,- Alkylacrylat- und Maleinsäureanhydrid-Terpolymeren;
- Ethylen-, Alkylacrylat- und Glycidylmethacrylat-Terpolymeren;
- mit Maleinsäureanhydrid gepfropften Polypropylen- und Polyethylenen;
- mit Maleinsäureanhydrid gepfropften Ethylen- und Propylen- und optional Dienmonomer-Copolymeren;
- mit Maleinsäureanhydrid gepfropften Ethylen- und Octen-Copolymeren;
und deren Gemisch.

11. Kasten nach einem der vorherigen Ansprüche, **dadurch gekennzeichnet, dass** der Gehalt an Schlagzähigkeitsmodifizierer zwischen 1 und 10 Gewichts-% bezogen auf das Gesamtgewicht der Zusammensetzung ist.

12. Kasten nach einem der vorherigen Ansprüche, **dadurch gekennzeichnet, dass** die Zusatzstoffe, die in der Zusammensetzung vorhanden sind, aus der der Kasten besteht, ausgewählt sind aus Wärmestabilisatoren, wie beispielsweise Kupferhalogeniden, Kupferacetaten, Silberhalogeniden, Silberacetaten, Stabilisatoren auf der Basis von komplexiertem Kupfer, phenolischen Antioxidantien, Stabilisatoren auf der Basis von Phosphor, HALS, Stabilisatoren vom Typ Amin, polyfunktionellen Stabilisatoren; Weichmachern, Gleitmitteln, organischen oder anorganischen Pigmenten, UV-Schutzmittel, Antistatika, mineralischen Füllstoffen und organischen Füllstoffen, vorzugsweise in einem Gehalt zwischen 0,1 und 15 Gewichts-% bezogen auf das Gesamtgewicht der Zusammensetzung.

13. Kasten nach einem der vorherigen Ansprüche, **dadurch gekennzeichnet, dass** er mindestens zwei Hüllen aufweist:
- eine innere Hülle, die aus der Zusammensetzung wie definiert in einem der Ansprüche 1 bis 12 besteht, die dazu bestimmt ist, direkt an die Batterie angepasst zu sein, und
- eine äußere Hülle, insbesondere als Feuchtigkeitssperrschicht.

14. Verwendung des Batteriekastens wie definiert in einem der Ansprüche 1 bis 13, um die Batterie vor Einwirkungen von außen zu schützen.

## Claims

1. A battery compartment for electric or hybrid vehicle **characterized in that** it is made up of a composition comprising:
- 20 to 80% by weight relative to the total weight of the composition of reinforcing fibers;
- 0 to 20% by weight relative to the total weight of the composition of at least one impact modifier;
- 0 to 20% by weight relative to the total weight of the composition of additives,
where the remainder is a matrix comprising:
- mostly at least one polyamide, the one or more polyamides present in the matrix of the composition forming the compartment having an average number of carbon atoms per nitrogen atom greater than or equal to 9 and
- at least one flame retardant, a flame retardant content included between 10 and 30% by weight relative to the total weight of the polyamide(s) present in the composition,
the one or more polyamides represent 20 to 80% by weight relative to the total weight of the composition.

2. The compartment according to claim 1, **characterized in that** the one or more polyamides present in the matrix of the composition constituting the compartment comprise at least two identical or different repeating units obtained by polycondensation of monomers chosen among an amino acid, a lactam and a unit satisfying the formula (Ca diamine)·(Cb diacid), with a representing the number of carbons in the diamine and b representing the number of carbons in the diacid, where a and b are each included between 4 and 36.

3. The compartment according to any one of the preceding claims, **characterized in that** the one or more polyamides present in the matrix of the composition are chosen from PA612, PA 69/12, PA 614, PA 6/12, PA 11/12, PA12, PA11, PA1010, PA1012, PA618, PA10T, PA 6/12/66, PA12/10T, PA1010/10T, PA6/6T/10T, PA11/6T/10T, PA12/6T/10T, PA6/69/11/12, PA6/66/11/12, PA11/10.T, PA11/BACT, 11/BACT/6T, MXDT/10T, MPMDT/10T, BACT/6T and BACT/10T and mixtures thereof.

4. The compartment according to any one of claims 1 to 3, **characterized in that** the one or more polyamides present in the matrix of the composition forming the compartment have an average number of carbon atoms per nitrogen atom greater than or equal to 10, and more preferably included between 9 and 18, and in particular included between 10 and 18.

5. The compartment according to the preceding claim, **characterized in that** the polyamide(s) present in the matrix of the composition forming the compartment is (are) chosen among PA 69/12, PA 614, PA 6/12, PA 11/12, PA12, PA11, PA1010, PA1012, PA618, PA10T, PA12/10T, PA1010/10T, PA 11/6T/10T, PA 12/6T/10T, PA 6/69/11/12, PA11/10.T, 11/BACT, 11/BACT/6T, MXDT/10T, MPMDT/10T, BACT/6T and BACT/10T and mixtures thereof.

6. The compartment according to any one of the preceding claims, **characterized in that** the flame retardant present in the matrix of the composition making up the compartment is chosen from a metal salt of phosphinic acid, a metal salt of diphosphinic acid, a polymer containing at least one metal salt of phosphinic acid, a polymer containing at least one metal salt of diphosphinic acid; red phosphorus, an antimony oxide, a zinc oxide, an iron oxide, a magnesium oxide, metal borates such as a zinc borate, melamine pyrophosphates, melamine cyanurates, and mixtures thereof.

7. The compartment according to any one of the preceding claims, **characterized in that** the matrix of the composition making up the compartment comprises a flame retardant content included between 15 and 25% by weight relative to the total weight of the one or more polyamides present in the composition.

8. The compartment according to any one of the preceding claims, **characterized in that** the composition making up the compartment comprises reinforcing fibers chosen from mineral fibers and polymer fibers.

9. The compartment according to any one of the preceding claims, **characterized in that** said reinforcing fibers are chosen from glass, carbon, ceramic and aramid fibers or mixtures thereof.

10. The compartment according to any one of the preceding claims, **characterized in that** the impact modifier present in the composition making up the compartment is chosen from the following functionalized polyolefins (B1):
- ethylene, alkyl acrylate and maleic anhydride terpolymers;
- ethylene, alkyl acrylate and glycidyl methacrylate terpolymers;
- maleic anhydride grafted polypropylenes and polyethylenes;
- maleic anhydride grafted ethylene and propylene copolymers and possibly diene monomer;
- maleic anhydride grafted ethylene and octene copolymers;
and mixtures thereof.

11. The compartment according to any one of the preceding claims, **characterized in that** the impact modifier content is included between 1 and 10% by weight relative to the total weight of the composition.

12. The compartment according to any one of the preceding claims, **characterized in that** the additives present in the composition forming the compartment are chosen from thermal stabilizers such as copper halides, copper acetates, silver halides, silver acetates, complex copper-based stabilizers, phenolic antioxidants, phosphorus based stabilizers, HALS, amine type stabilizers, polyfunctional stabilizers; plasticizers, lubricants, organic or inorganic pigments, anti-UV; antistatic; mineral fillers and organic fillers, preferably in an amount between 0.1 and 15% by weight relative to the total weight of the composition.

13. The compartment according to any one of the preceding claims **characterized in that** it comprises at least two enclosures:
- an inner enclosure made up of the composition such as defined in any one of the claims 1 to 12, intended to be adapted directly to the battery; and
- an outer enclosure, in particular as a moisture barrier layer.

14. Use of the battery compartment according to claims 1 to 13 for protecting the battery from outside attack.
